# EUROPÄISCHE PATENTANMELDUNG

(11) **EP 1 469 573 A1**
(43) Veröffentlichungstag der Anmeldung: **20.10.2004**
(21) Anmeldenummer: 03009075.7
(22) Anmeldetag: 18.04.2003
(51) Int. Cl.: H02G 9/06, F16L 17/04

(54) **Verbindung von zumindest zwei voneinander beabstandeten Kabelrohr-Enden vorzugsweise in einem Unterflur-Kabelschacht**

(71) Anmelder: IED Industrial Engineering & Design GmbH, 8572 Bärnbach (AT)
(72) Erfinder: Auer, Wolfgang, 8580 Köflach (AT)
(74) Vertreter: Hanke, Hilmar

(57) **Zusammenfassung**

Bei einer Verbindung von zumindest zwei voneinander beabstandeten Kabelrohr-Enden vorzugsweise von im Erdboden verlegten Kabelrohren in einem Unterflur-Kabelschacht eines örtlichen Kabelrohr-Netzsystems, wobei in den Kabelrohren Kabel, vorzugsweise Glasfaser-Kabel, aufgenommen oder aufzunehmen sind, wird vorgeschlagen, daß für ein kurzzeitiges Durchverbinden zweier vorzugsweise ausgerichteter voneinander beabstandeter Kabelrohr-Enden (2, 3) zwecks Einblasen zumindest eines Kabels durch beide Kabelrohre ein an die Kabelrohr-Enden (2, 3) anlegbarer öffenbarer gasabdichtender Schnellmontageverschluß (1) verwendet wird.

## Beschreibung

Die Erfindung betrifft eine Verbindung von zumindest zwei voneinander beabstandeten Kabelrohr-Enden vorzugsweise von im Erdboden verlegten Kabelrohren oder -Schläuchen in einem Unterflur-Kabelschacht eines örtlichen Kabelrohr-Netzsystems, wobei in den Kabelrohren Kabel, vorzugsweise Glasfaser-Kabel, aufgenommen oder aufzunehmen sind.

Um in einem Unterflur-Kabelschacht bzw. Verteilerschacht einzelne zu- und abführende Kabel miteinander zu verbinden, werden die Kabel im Kabelschacht mit einer Reservelänge versehen, um die Kabelenden nach Öffnen des Kabelschachtes außerhalb des Kabelschachtes zum Beispiel über Verbindungsmuffen in freier Umgebung in Erdbodenhöhe zu verbinden und nachher wieder nebst Verbindungsmuffe oder dergleichen im Schacht wieder einzubringen. Sind Neukabel, zum Beispiel Lichtwellenleiter, im Kabelrohr-Netzsystem zu verlegen, werden diese von Kabelschacht zu Kabelschacht in das Kabelrohr eingeblasen und im Kabelschacht wie vorgenannt verbunden. Ein derartiger Vorgang ist vergleichsweise aufwändig.

Ausgehend von vorgenanntem Stand der Technik ist es Aufgabe der Erfindung, zwischen zumindest zwei voneinander beabstandeten Kabelrohr-Enden einer Verbindung der eingangs genannten Art Kabel einfach verlegen zu können.

Gelöst wird die der Erfindung zugrundeliegende Aufgabe dadurch, daß für ein kurzzeitiges Durchverbinden zweier vorzugsweise ausgerichteter voneinander beabstandeter Kabelrohr-Enden zwecks Einblasen zumindest eines Kabels durch beide Kabelrohre ein an die Kabelrohr-Enden anlegbarer öffenbarer gasabdichtender Schnellmontageverschluß verwendet wird.

Der erfindungsgemäße Schnellmontageverschluß kennzeichnet sich speziell durch zwei im Bereich einer Längsseite angelenkte aufklappbare vorzugsweise geradlinige Halbrohre, deren Innendurchmesser in etwa dem Außendurchmesser der zu verbindenden Kabelrohr-Enden entspricht und deren Länge größer als der Abstand der zu verbindenden Kabelrohr-Enden ist, wobei insbesondere zumindest eine lösbare radiale Klemmhebelanordnung zum kurzzeitigen gasdichten Verschließen der beiden zusammengeklappten Halbrohre vorgesehen ist.

Die Klemmhebelanordnung kann an jedem Längsende der Halbrohre vorgesehen sein, bei größerer Länge der Halbrohre gegebenenfalls noch eine weitere Klemmhebelanordnung im Bereich der Längsmitte der Halbrohre.

Weitere vorteilhafte Ausgestaltungen des Schnellmontageverschlusses ergeben sich aus den Ansprüchen.

Von Vorteil bei der Erfindung ist, daß bei Verwendung eines erfindungsgemäßen Schnellmontageverschlusses die einzelnen Kabel nicht von Kabelschacht zu Kabelschacht separat eingeblasen und dann durch aufwändige eingangs genannte Maßnahmen wie nach dem Stand der Technik miteinander verbunden werden müssen. Vielmehr wird im Kabelschacht das Kabelrohr-Ende eines Kabelrohres mit dem Kabelrohr-Ende des anderen Kabelrohres durch Anlegen des erfindungsgemäßen Schnellmontageverschlusses gasdicht verbunden, und dann das Kabel durch beide Kabelrohre direkt ein- bzw. durchgeblasen. Anschließend wird der Schnellmontageverschluß wieder entfernt und an anderer Stelle wieder verwendet. Mithin müssen in einem Kabelschacht keine Kabel mehr miteinander verbunden werden: der aufwändige Verbindungsvorgang wie nach dem Stand der Technik entfällt. Da das verlegte Kabel eine einzige Länge ist, die durch den Kabelschacht führt, können auch keine Leitungsstörungen wie an den Klemmstellen bekannter Verbindungsmuffen oder dergleichen auftreten. Ferner muß nur ein einziger Durchblasvorgang für zwei Kabelrohre bei einem Kabelschacht oder für mehrere Kabelrohre bei mehreren Kabelschächten durchgeführt werden, was eine weitere Vereinfachung gegenüber dem Stand der Technik darstellt. Die Erfindung nutzt die Erkenntnis aus, daß es genügt, zwei Kabelrohr-Enden nur kurzzeitig miteinander nur zum Zwecke des Durchblasens eines Kabels miteinander zu verbinden, und daß das durchgeblasene Kabel dann zwischen den voneinander beabstandeten Kabelrohr-Enden ohne zusätzlichen Schutz ohne weiteres frei liegen kann, ohne die Funktion des Kabels im Betrieb zu beeinträchtigen. Dies gilt insbesondere dann, wenn das Kabel zumeist im geschützten Innenbereich eines Kabelschachtes verlegt ist, wo es von Schmutz und Wasser und äußeren mechanischen Störungseinflüssen fern gehalten wird. Es muß das Kabel nicht unbedingt in einem Kabelschacht unter der Erde bzw. in Unterflur-Anordnung angeordnet sein. Ein Kabel kann auch erfindungsgemäß beispielsweise über der Erde verlegt sein, zum Beispiel an Stellen, die anderweitig gegebenenfalls in einem Gebäude oder in einem Schutzkasten geschützt untergebracht und/oder für Personen unzugänglich sind.

Zwei durch einen Schnellmontageverschluß zu verbindende voneinander beabstandete Kabelrohr-Enden sind vorzugsweise zueinander ausgerichtet. Dann kann ein Schnellmontageverschluß mit zwei geradlinigen Halbrohren verwendet werden. Bei nicht zueinander ausgerichteten voneinander beabstandeten Kabelrohr-Enden werden in Längsrichtung gekrümmte Halbrohre verwendet. Anstelle fester Kabelrohre können auch in Längsrichtung flexible Kabelschläuche bzw. krümmbare Kabelschläuche verwendet sein, welche in Umfangsrichtung stabil sind. Dann können im Kabelschacht nicht ausgerichtete Kabelschläuche im Endbereich so gekrümmt werden, daß ein Schnellmontageverschluß auch mit geradlinigen Halbrohren kurzzeitig anschließbar ist.

Zwar kennt man nach dem Stand der Technik die Reparatur eines beschädigten unterbrochenen Kabelrohres durch Anlegen und Abdichten zweier Halbrohre im Bereich der Bruchstelle des Kabelrohres, um anschließend gegebenenfalls weitere Kabel durch das reparierte Kabelrohr durchzublasen. Die beiden Halbrohre bleiben aber dann ein fester mit dem Kabelrohr verbundener Bestandteil der Gesamtanordnung, auch nach dem Durchblasvorgang, und können nicht mehr weiter verwendet werden.

Die Erfindung wird nachfolgend anhand eines Ausführungsbeispiels unter Bezugnahme auf die beigefügten Zeichnungen näher beschrieben; es zeigen:
- Figur 1: in einer perspektivischen Darstellung einen Schnellmontageverschluß in einer geschlossenen Stellung,
- Figur 2: den Schnellmontageverschluß nach Figur 1 in einer geöffneten Stellung,
- Figur 3: die Einzelheit einer Abdichtung eines Halbrohres eines Schnellmontageverschlusses nach den Figuren 1 und 2,
- Figur 4: zwei zu verbindende Kabelrohr-Enden,
- Figur 5: die Kabelrohr-Enden nach Figur 4 mit einem Schnellmontageverschluß gemäß Figur 2 in einer geöffneten Stellung, und
- Figur 6: die Kabelrohr-Enden nach Figur 4 mit einem Schnellmontageverschluß gemäß Figur 1 in einer geschlossenen Stellung.

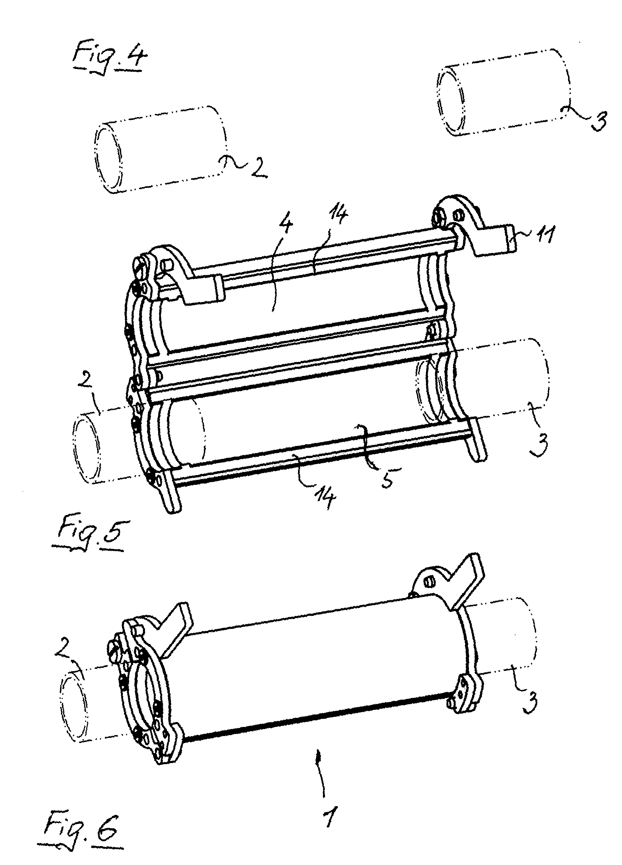

Gemäß Zeichnungen ist ein Schnellmontageverschluß 1 für eine kurzzeitige Verbindung von zumindest zwei voneinander beabstandeten Kabelrohr-Enden 2, 3 gemäß Figur 4 vorzugsweise von im Erdboden verlegten Kabelrohren in einem Unterflur-Kabelschacht eines örtlichen Kabelrohr-Netzsystems vorgesehen. In den Kabelrohren befinden sich nicht veranschaulichte Kabel, vorzugsweise Glasfaser-Kabel bzw. Lichtwellenleiter oder dergleichen.

Der Schnellmontageverschluß 1 weist zwei im Bereich einer Längsseite angelenkte aufklappbare vorzugsweise geradlinige Halbrohre 4, 5 auf, deren Innendurchmesser in etwa dem Außendurchmesser der zu verbindenden Kabelrohr-Enden 2, 3 entspricht und deren Länge größer als der Abstand der zu verbindenden Kabelrohr-Enden ist.

An jedem Längsende der Halbrohre 4, 5 ist eine radiale Klemmhebelanordnung 6 vorgesehen.

Jede radiale Klemmhebelanordnung 6 besitzt zwei in Stirnansicht der Halbrohre 4, 5 halbkreisförmige Halteklauen 7, 8, von denen die eine Halteklaue 7 mit dem Mantel des einen Halbrohrs 4 und die andere Halteklaue 8 mit dem Mantel des anderen Halbrohrs 5 befestigt ist.

Insbesondere sind die beiden Halteklauen 4, 5 über Zentrierbolzen 15 an der stirnseitigen Rohrwand der Halbrohre 4, 5 zentriert und über Befestigungsschrauben 16 axial verschraubt.

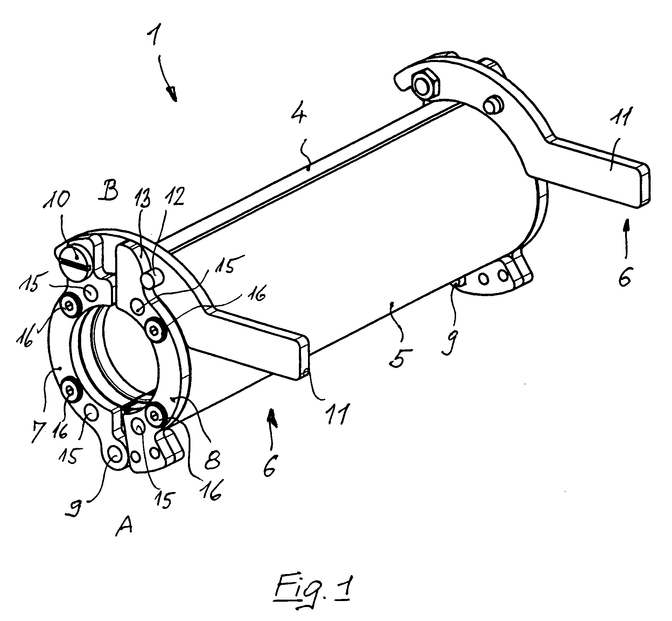

Beide Halteklauen 7, 8 sind im Bereich ihres einen halbkreisförmigen Endes A gemäß Figur 1 aneinander angelenkt. Diese Gelenkstelle 9 bestimmt in Verbindung mit der Gelenkstelle 9 der Halbklauen 7, 8 der anderen Klemmhebelanordnung 6 die Längsanlenkung der beiden Halbrohre 4, 5.

Die eine Halteklaue 7 besitzt an ihrem der Gelenkstelle 9 abgewandten halbkreisförmigen Ende B gemäß Figur 1 eine weitere Gelenkstelle 10, an der ein von Hand betätigbarer Schwenkhebel 11 angelenkt ist, der sich im wesentlichen in radialer Richtung erstreckt.

Der Schwenkhebel 11 weist einen festen axialen Bolzen 12 auf, der in eine Arretierstellung mit der anderen Halteklaue 8 bringbar ist, wenn beide Halteklauen 7, 8 bzw. beide Halbrohre 4, 5 zusammengeklappt sind, wie nachfolgend noch beschrieben wird.

Der feste axiale Bolzen 12 des Schwenkhebels 11 kann in der Arretierstellung in eine Kerbe längs einer Rampe 13 gebracht werden, welche an dem der Gelenkstelle 9 abgewandten halbkreisförmigen Ende B der anderen Halteklaue 8 vorgesehen ist.

Beide Halbrohre 4, 5 weisen im Bereich ihrer Längsenden jeweils auf dem Innenumfang eine Dichtnut auf, in welcher eine Umfangsabdichtung U formschlüssig aufgenommen ist.

Auch besitzen die beiden Halbrohre 4, 5 längs ihrer zusammenklappbaren Trennflächen bzw. Längswände der Halbrohre 4, 5 Längsabdichtungen L.

Die Umfangsabdichtungen U und Längsabdichtungen L eines jeden Halbrohrs 4 bzw. 5 sind in Form jeweils einer einzigen einstückigen Abdichtung 14 vorgesehen, welche ein elastomeres Spritzgußteil ist.

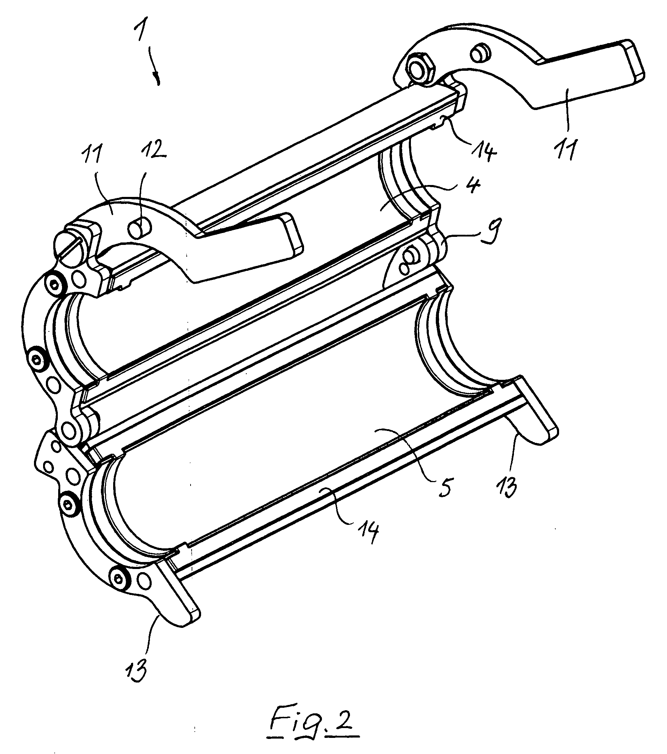

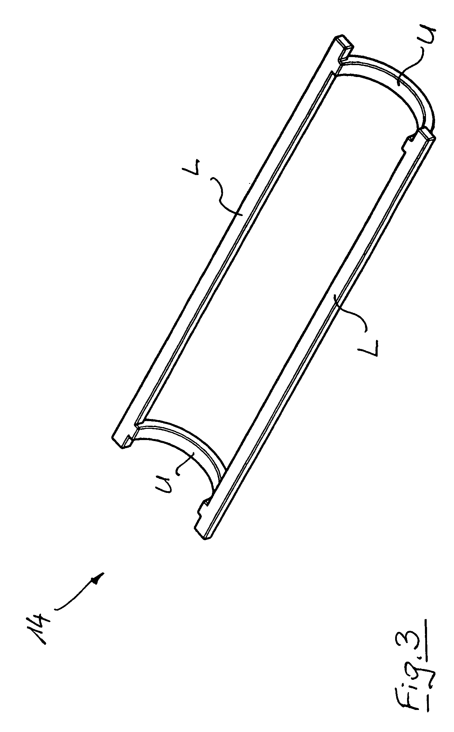

Wie am besten aus Figur 2 zu entnehmen ist, sind zwei gleich ausgebildete Abdichtungen 14 bzw. Dichthälften gemäß Figur 3 in die Trennfläche der beiden Halbrohre 4, 5 sowie in Halbkreisform längsendseitig als Umfangsabdichtung eingelegt. Die Dichthälften stehen mit ihren flächigen Dichtlippen in der Trennebene sowie auf dem Umfang radial einwärts vor. Bei zusammengeklappten Halbrohren findet keine direkte Berührung der Halbrohre statt. Die Berührung erfolgt ausschließlich über die Dichthälften, so daß rundum eine gesicherte Gasabdichtung gegeben ist.

Mit Bezug auf die Figuren 4 bis 6 wird im Betrieb für ein kurzzeitiges Durchverbinden zweier vorzugsweise ausgerichteter voneinander beabstandeter Kabelrohr-Enden 2, 3 zwecks Einblasen zumindest eines Kabels durch beide Kabelrohre der geöffnete bzw. aufgeklappte Schnellmontageverschluß 1 gemäß Figur 5 mit seinem unteren Halbrohr 5 an die Unterseite der Kabelrohr-Enden 2, 3 angelegt. Dann werden die Halbrohre 4, 5 bei geöffnetem Schwenkhebel 11 zusammengeklappt, so daß beide Abdichtungen 14 der Halbrohre sich berühren. Daraufhin werden die Schwenkhebel 11 von Hand aus der geöffneten Stellung gemäß den Figuren 2 bzw. 5 in die geschlossene Stellung gemäß den Figuren 1 bzw. 6 verschwenkt. Hierbei gelangen die axialen Bolzen 12 der Schwenkhebel längs der Rampen 13 in ihre Arretierstellung in eine geringfügig zurückversetzte nicht veranschaulichte Kerbe. Ersichtlich werden somit mit geringer manueller Betätigungskraft nicht nur beide Abdichtungen 14 der beiden Halbrohre 4, 5 miteinander flächig verspannt, sondern es wird auch der gesamte Schnellmontageverschluß 1 an den Kabelrohr-Enden 2, 3 in einer gesicherten abgedichteten durchverbindenden Stellung angeordnet.

Nach einem Einblasen des oder der Kabel durch beide Kabelrohre wird der Schnellmontageverschluß 1 wieder in umgekehrter Richtung geöffnet und an anderer Stelle zu verbindender Kabelrohre weiterverwendet.

## Patentansprüche

1. Verbindung von zumindest zwei voneinander beabstandeten Kabelrohr-Enden vorzugsweise von im Erdboden verlegten Kabelrohren in einem Unterflur-Kabelschacht eines örtlichen Kabelrohr-Netzsystems, wobei in den Kabelrohren Kabel, vorzugsweise Glasfaser-Kabel, aufgenommen oder aufzunehmen sind,
**dadurch gekennzeichnet,**
**daß** für ein kurzzeitiges Durchverbinden zweier vorzugsweise ausgerichteter voneinander beabstandeter Kabelrohr-Enden (2, 3) zwecks Einblasen zumindest eines Kabels durch beide Kabelrohre ein an die Kabelrohr-Enden (2, 3) anlegbarer öffenbarer gasabdichtender Schnellmontageverschluß (1) verwendet wird.

2. Verbindung nach Anspruch 1,
**dadurch gekennzeichnet,**
**daß** der Schnellmontageverschluß (1) zwei im Bereich einer Längsseite angelenkte aufklappbare vorzugsweise geradlinige Halbrohre (4, 5) aufweist, deren Innendurchmesser in etwa dem Außendurchmesser der zu verbindenden Kabelrohr-Enden (2, 3) entspricht und deren Länge größer als der Abstand der zu verbindenden Kabelrohr-Enden ist.

3. Verbindung nach Anspruch 2,
**dadurch gekennzeichnet,**
**daß** zumindest eine lösbare radialer Klemmhebelanordnung (6) zum kurzzeitigen gasdichten Verschließen der beiden zusammengeklappten Halbrohre (4, 5) vorgesehen ist.

4. Verbindung nach Anspruch 3,
**dadurch gekennzeichnet,**
**daß** an jedem Längsende der Halbrohre (4, 5) eine radiale Klemmhebelanordnung (6) vorgesehen ist.

5. Verbindung nach Anspruch 3 oder 4,
**dadurch gekennzeichnet,**
**daß** eine radiale Klemmhebelanordnung (6) im Bereich der Längsmitte der Halbrohre (4,5) vorgesehen ist.

6. Verbindung nach einem der Ansprüche 3 bis 5,
**dadurch gekennzeichnet,**
**daß** die radiale Klemmhebelanordnung (6) zwei in Stirnansicht der Halbrohre (4, 5) halbkreisförmige Halteklauen (7, 8) besitzt, von denen die eine Halteklaue (7) mit dem Mantel des einen Halbrohrs (4) und die andere Halteklaue (8) mit dem Mantel des anderen Halbrohrs (5) befestigt ist.

7. Verbindung nach Anspruch 6,
**dadurch gekennzeichnet,**
**daß** beide Halteklauen (7, 8) im Bereich ihres einen halbkreisförmigen Endes (A) aneinander angelenkt sind und diese Gelenkstelle (9) in Verbindung mit der Gelenkstelle (9) der Halbklauen zumindest einer weiteren Klemmhebelanordnung (6) die Längsanlenkung der beiden Halbrohre (4, 5) bestimmt.

8. Verbindung nach Anspruch 7,
**dadurch gekennzeichnet,**
**daß** die eine Halteklaue (7) an ihrem der Gelenkstelle (9) abgewandten halbkreisförmigen Ende (B) eine weitere Gelenkstelle (10) besitzt, an der ein vorzugsweise von Hand betätigbarer Schwenkhebel (11) angelenkt ist.

9. Verbindung nach Anspruch 8,
**dadurch gekennzeichnet,**
**daß** der Schwenkhebel (11) einen festen axialen Bolzen (12) aufweist, der in eine Arretierstellung mit der anderen Halteklaue (8) bringbar ist, wenn beide Halteklauen (7, 8) bzw. beide Halbrohre (4, 5) zusammengeklappt sind.

10. Verbindung nach Anspruch 9,
**dadurch gekennzeichnet,**
**daß** der feste axiale Bolzen (12) des Schwenkhebels (11) in der Arretierstellung in eine Kerbe längs einer Rampe (13) bringbar ist, welche an dem der Gelenkstelle (9) abgewandten halbkreisförmigen Ende (B) der anderen Halteklaue (8) vorgesehen ist.

11. Verbindung nach einem der Ansprüche 2 bis 10,
**dadurch gekennzeichnet,**
**daß** die beiden Halbrohre (4, 5) im Bereich ihrer Längsenden innenseitig zumindest eine Umfangsabdichtung (U) aufweisen.

12. Verbindung nach einem der Ansprüche 2 bis 11,
**dadurch gekennzeichnet,**
**daß** die beiden Halbrohre (4, 5) längs ihrer zusammenklappbaren Trennflächen bzw. Längswände zumindest eine Längsabdichtung (L) aufweisen.

13. Verbindung nach Anspruch 11 und 12,
**dadurch gekennzeichnet,**
**daß** die Umfangsabdichtungen (U) und Längsabdichtungen (L) eines jeden Halbrohrs (4 bzw. 5) in Form einer einstückigen Abdichtung (14) vorgesehen ist, welche vorzugsweise ein Spritzgußteil ist.
